# EUROPEAN PATENT SPECIFICATION

(11) **EP 4 476 942 B1**
(45) Date of publication and mention of the grant of the patent: **07.10.2026**
(21) Application number: 23703724.7
(22) Date of filing: 03.02.2023
(51) Int. Cl.: H04W 24/08, H04W 24/10, H04W 52/02

(54) **EFFICIENT INTER-CELL L1-RSRP MEASUREMENT AND REPORTING**
EFFIZIENTE L1-RSRP-MESSUNG UND -MELDUNG ZWISCHEN ZELLEN
MESURE ET NOTIFICATION EFFICACES DE L1-RSRP ENTRE CELLULES

(30) Priority: 09.02.2022 US 202263308303 P
(43) Date of publication of application: 18.12.2024
(73) Proprietor: Telefonaktiebolaget LM Ericsson (publ), 164 83 Stockholm (SE)
(72) Inventor: TIDESTAV, Claes, 746 31 BÅLSTA (SE)
(74) Representative: Ericsson
(86) International application number: PCT/EP2023/052677
(87) International publication number: WO 2023/152043

(56) References cited:
- WO-A1-2022/021335
- US-A1- 2020 068 497
- US-A1- 2020 374 725
- US-A1- 2022 322 115
- NOKIA ET AL: "Power consumption reduction in RRM measurements", vol. RAN WG2, no. Xian, China; 20190408 - 20190412, 6 April 2019 (2019-04-06), XP051701616, Retrieved from the Internet <URL:http://www.3gpp.org/ftp/Meetings%5F3GPP%5FSYNC/RAN2/Docs/R2%2D1904309%2Ezip> [retrieved on 20190406]

## Description

### Technical Field

The present disclosure relates to a a User Equipment (UE) and method performed by a UE for performing physical layer L1 Reference Signal Received Power RSRP measurements. The present disclosure also relates to a method performed by a network node for receiving from the UE L1-RSRP measurements.

### Background

Third Generation Partnership Project (3GPP) New Radio (NR) is designed to operate in higher frequency (millimeter (mm) wave frequencies) bands such as bands in the range of 24.2 Gigahertz (GHz) to 71 GHz, which is also referred to as frequency range 2 (FR2). In the high frequency bands, received signal power is attenuated with the square of frequency, and the range of reception for these bands will be smaller compared to lower frequency bands. To achieve better coverage with the same transmission power for higher frequency bands, more antenna gain is required, and more antenna gain can be achieved with the concept called beamforming. However, beamforming results in the narrower beams. With beams becoming narrower, it is impossible to cover the entire area of the cell, as in a Long Term Evolution (LTE) evolved Node B (eNB), with a one narrow beam and hence multiple narrow beams are required to be transmitted to cover the entire cell area. Relevant prior art disclosures in this technical field are WO 2022/021335 A1 and US 2020/374725 A1.

### Synchronization Signal Block (SSB)

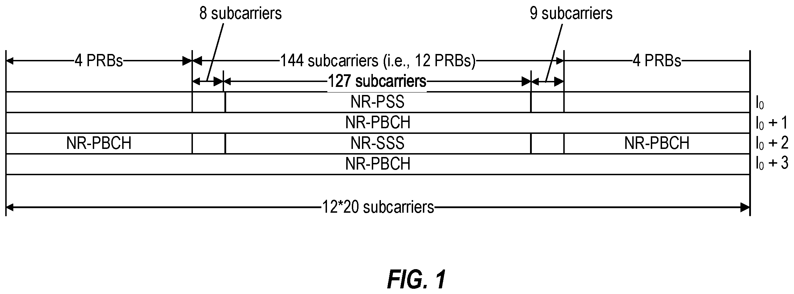

The SSB is a broadcast signal in NR that aims to provide initial synchronization, basic system information, and mobility measurements. The structure of the SSB is shown in Figure 1 and consists of one Primary Synchronization Signal (PSS), one Secondary Synchronization Signal (SSS), and a Physical Broadcast CHannel (PBCH). The PSS and SSS is transmitted over 127 sub-carriers, where the sub-carrier spacing could be 15 or 30 kilohertz (kHz) for below 6 GHz and 120 or 240 kHz for above 6 GHz. The SSB is also referred to as a SS/PBCH block.

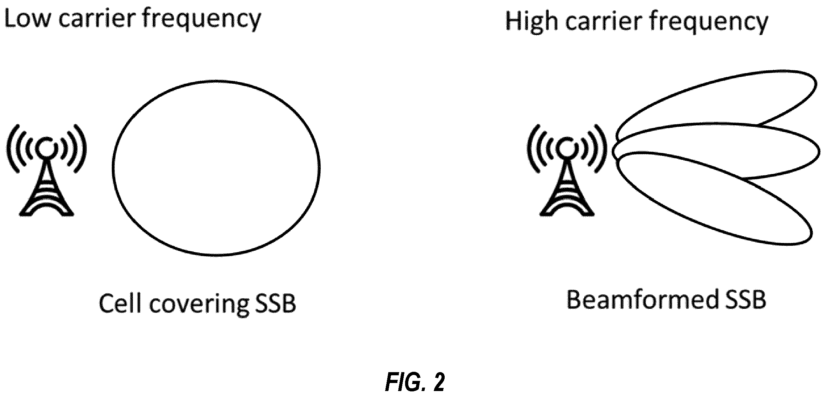

For low frequencies, it is expected that each cell transmits one SSB that covers the whole cell, while for higher frequencies several beamformed SSBs are expected to be needed to attain coverage over the whole cell, as illustrated in Figure 2. Figure 2 illustrates an example of single SSB covering a cell (left) and multiple beamformed SSBs that together cover the cell (right). The maximum number of configurable SSBs per cell depends on the carrier frequency: below 3 GHz=4, 3-6 GHz=8, above 6 GHz=64. The SSBs are transmitted in an SSB transmission burst which could last up to 5 milliseconds (ms). The periodicity of the SSB burst is configurable with the following options: 5,10, 20,40,80,160 ms.

### L3 Mobility and the Associated Measurements

Handover is an important part of any mobile communications system. In state-of-the art cellular systems, handover is the process of transferring an ongoing connection of a User Equipment (UE) from one base station (*the serving base station*) to another base station (*the target base station*), or from one cell (*the serving cell*) to another cell (*the target cell*) within the same base station. This is done to accomplish connectivity over a larger area. The handover should happen without any loss of data and preferably with no interruption.

In NR, mobility in RRC_CONNECTED is UE-assisted network (NW) controlled handover (HO), with HO preparation signaling.

One important aspect of the mobility procedure in NR is the so-called Radio Resource Control (RRC)-based measurement reports. During the RRC connection setup, the network can configure the UE with so-called mobility events with some conditions related to the quality of the serving cell and/or the neighbor cells that, when fulfilled, triggers the UE to send an RRC MEASUREMENT REPORT. The source next generation Node B (gNB) (i.e., the NR base station) can use the MEASUREMENT REPORT and Radio Resource Management (RRM) information to make a handover decision for the UE. After a HO decision is made, the source gNB prepares the target gNB for handover and passes relevant information in the handover command to the UE.

The UE reports measurements in accordance with the measurement configuration applicable for a UE in RRC_CONNECTED by means of dedicated signaling. The measurement configuration includes several parameters grouped in information elements (IEs) such as measurement objects, reporting configurations, measurement identities, quantity configurations, and measurement gaps.

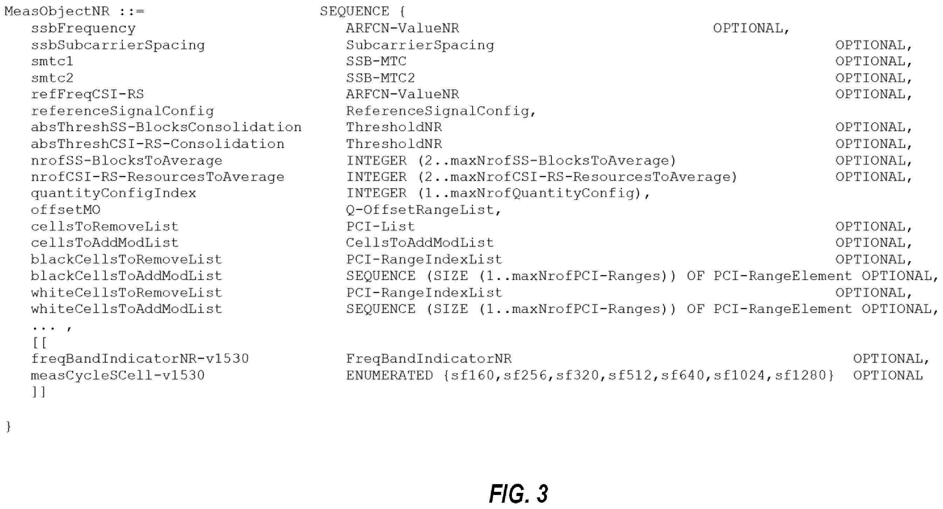

The measurement object contains information applicable for SS/PBCH block(s) intra/inter-frequency measurements and/or Channel State Information Reference Signal (CSI-RS) intra/inter-frequency measurements. The content of the IE *MeasObjectNR* is depicted in Figure 3.

In the measurement object, the NW provides the UE with information on how to perform the measurements that would be used to perform the mobility in RRC_CONNECTED. The measurement object may contain information about neighbor cells on which the UE is to perform the measurements by adding a list of physical cell identities (PCIs) in cellsToAddRemoveList. However, the most common case is that the NW only provides an SSB frequency (in ssbFrequency), and the UE tries to detect any cell on the configured SSB frequency and performs measurements on the cells that fulfill certain criteria.

In RRC_CONNECTED, the UE performs measurements on multiple reference signals associated with a cell, and the measurements results are averaged to derive the cell quality. Filtering takes place at two different levels, namely, at the physical layer to derive reference signal quality and then at RRC level to derive cell quality from multiple reference signals associated with the same cell. The RRC filtering is also known as L3 filtering. Cell quality from reference signal measurements is derived in the same way for the serving cell(s) and for the non-serving cell(s). Measurement reports may contain the measurement results of the Xbest reference signals if the UE is configured to do so by the gNB.

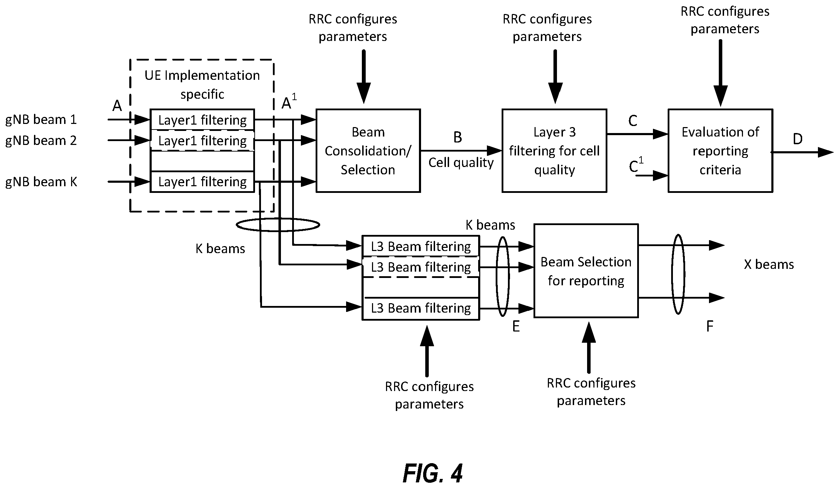

The corresponding high-level measurement model is depicted in Figure 4, which is reproduced from 3GPP Technical Specification (TS) 38.300 V16.6.0. In Figure 4,
- K beams correspond to the measurements on reference signal (SSB) configured for L3 mobility by gNB and detected by UE at L1. As described above, the configuration may only include an SSB frequency.
- **A:** measurements (beam specific samples) internal to the physical layer.
- **Layer 1 filtering:** Internal layer 1 filtering of the inputs measured at point A. Exact filtering is implementation dependent
- **A¹**: Measurements (i.e., beam specific measurements) reported by layer 1 to layer 3 after layer 1 filtering.

For future reference, these measurement are referred to herein as RRM measurements.

### Beam Management

Considering multiple beam support to cover the cell area and the UE mobility, mobility handling between beams has been specified in NR. With multiple narrow beams used, each beam is only optimal within a small area, and the signal strength outside the optimal beam area deteriorates quickly. Hence, frequent and fast beam switching may be needed to maintain high performance and continuous connectivity. Typically, the UE performs measurements on reference signals transmitted in different beams and reports those measurements to the NW. Based on the measurements, the NW decides the beam in which to transmit data to the UE.

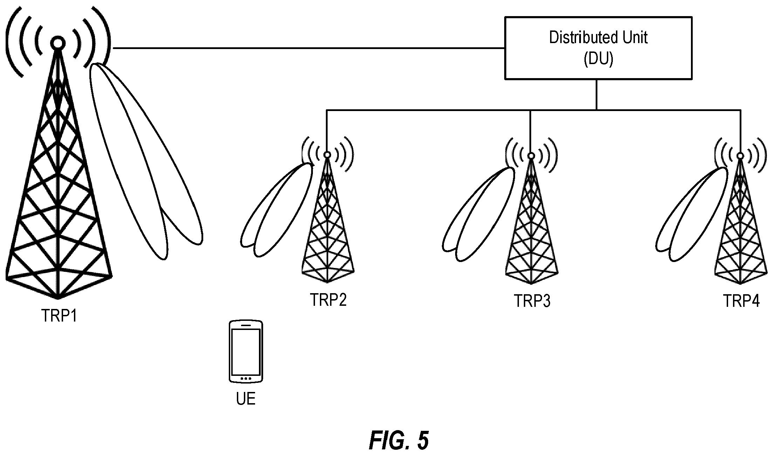

As shown in Figure 5, multiple Transmission and Reception Points (TRPs) can be deployed under a single cell or multiple cells. In one example, TRPs can be considered as radio units, and the scheduling for these TRPs can be assumed to be performed at a distributed unit (DU) (e.g., a gNB-DU).

### L1-RSRP Measurements for Reporting

When configured by the network, the UE shall be able to perform Layer 1 Reference Signal Received Power (L1-RSRP) measurements of configured CSI-RS or SSB. In NR Release 16, the L1-RSRP measurements shall be performed by a UE only for serving cells, including Primary Cell (PCell), Primary Secondary Cell (PSCell), or Secondary Cell (SCell), on the resources configured for L1-RSRP measurements within the active bandwidth part (BWP).

For NR Release 17, the L1-RSRP measurements were extended to inter-cell reporting. The UE will then be able to report measurements over L1 also for reference signals (e.g., SSBs) transmitted from non-serving cells. The measurements must still be explicitly configured, i.e., the identity of the reference signals on which the UE performs measurements must be provided to the UE using dedicated signaling.

The L1-RSRP measurements are the measurements at A1 in Figure 4. However, when it comes to configuration and measurement reporting, there is an important difference between the L1-RSRP measurements and the RRM measurements above, namely, for the L1-RSRP measurements, the UE is required to perform measurements on *all* the configured reference signals, whereas for the RRM measurements, the UE must perform measurements only on the identified reference signals.

### Summary

Apparatus and methods for physical layer (L1) Reference Signal Received Power (RSRP) measurement and reporting are disclosed. In one embodiment, a method performed by a User Equipment (UE) according claim 1 is dislosed.. In this manner, UE complexity is reduced.

In one embodiment, the method further comprises receiving, from a network node, information that configures the UE to perform the RRM measurements and information that configures the UE to perform the L1-RSRP measurements on the first set of reference signals.

In one embodiment, the method further comprises performing the RRM measurements, wherein performing the RRM measurements comprising identifying the second set of reference signals. In one embodiment, the method further comprises reporting the RRM measurements for the second set of reference signals identified while performing the RRM measurements.

In one embodiment, performing the L1-RSRP measurements comprises performing the L1-RSRP measurements for only the subset of the first set of reference signals configured for L1-RSRP measurements.

In one embodiment, performing the L1-RSRP measurements comprises performing the L1-RSRP measurements for the first set of reference signals configured for L1-RSRP measurements.

In one embodiment, reporting the L1-RSRP measurements comprises reporting a fixed number of L1-RSRP measurement values. The number of L1-RSRP measurements reported for the subset of the first set of reference signals configured for L1-RSRP measurements is less than the fixed number of L1-RSRP measurement values. The L1-RSRP measurements reported comprise the L1-RSRP measurements reported for the subset of the first set of reference signals configured for L1-RSRP measurements and a number predetermined L1-RSRP values that indicate that corresponding reference signals were not found, such that a total number of L1-RSRP measurements reported is equal to the fixed number of L1-RSRP measurement values.

In one embodiment, the UE reports capability information to a network node that indicates whether the UE supports reporting of all reference signals configured for L1-RSRP measurement or only a subset of those reference signals that are identified during RRM measurements.

In one embodiment, the reference signals are Synchronization Signal Blocks (SSBs).

Corresponding embodiments of a UE are also disclosed. In one embodiment, a UE is disclosed according to claim 10.

Embodiments of a method performed by a network node are also disclosed according to claim 11..

In one embodiment, the method further comprises performing one or more operational tasks based on the L1-RSRP measurements.

In one embodiment, the method further comprises sending, to the UE, information that configures the UE to perform the RRM measurements and information that configures the UE to perform the L1-RSRP measurements on the first set of reference signals.

In one embodiment, receiving the L1-RSRP measurements comprises receiving (710), from the UE, a fixed number of L1-RSRP measurement values comprising the L1-RSRP measurements reported for the subset of the first set of reference signals configured for L1-RSRP measurements and a number predetermined L1-RSRP values that indicate that corresponding reference signals were not found, such that a total number of L1-RSRP measurements received from the UE is equal to the fixed number of L1-RSRP measurement values.

In one embodiment, the network node receives capability information for the UE that indicates whether the UE supports reporting of all reference signals configured for L1-RSRP measurement or only a subset of those reference signals that are identified during RRM measurements.

In one embodiment, the reference signals are SSBs.

### Brief Description of the Drawings

The accompanying drawing figures incorporated in and forming a part of this specification illustrate several aspects of the disclosure, and together with the description serve to explain the principles of the disclosure.
Figure 1 illustrates the structure of the Synchronization Signal Block (SSB) in New Radio (NR) as defined by the Third Generation Partnership Project (3GPP) specifications;
Figure 2 illustrates an example of single SSB covering a cell (left) and multiple beamformed SSBs that together cover the cell (right);
Figure 3 illustrates the content of the Information Element (IE) *MeasObjectNR,* as defined in 3GPP specifications;
Figure 4 illustrates a high-level measurement model as defined in 3GPP Technical Specification (TS) 38.300 V16.6.0;
Figure 5 illustrates that multiple Transmission and Reception Points (TRPs) can be deployed under a single cell or multiple cells;
Figure 6 shows an example of a communication system in which embodiments of the present disclosure may be implemented;
Figure 7 illustrates the operation of a network node and a User Equipment (UE) in accordance with one example of an embodiment of the present disclosure;
Figure 8 illustrates a UE in accordance with some embodiments;
Figure 9 illustrates a network node in accordance with some embodiments;
Figure 10 is a block diagram of a host, which may be an embodiment of the host of Figure 6, in accordance with various aspects described herein;
Figure 11 is a block diagram illustrating a virtualization environment in which functions implemented by some embodiments may be virtualized; and
Figure 12 shows a communication diagram of a host communicating via a network node with a UE over a partially wireless connection in accordance with some embodiments.

### Detailed Description

The embodiments set forth below represent information to enable those skilled in the art to practice the embodiments and illustrate the best mode of practicing the embodiments. Upon reading the following description in light of the accompanying drawing figures, those skilled in the art will understand the concepts of the disclosure and will recognize applications of these concepts not particularly addressed herein. It should be understood that these concepts and applications fall within the scope of the disclosure.

There currently exist certain challenge(s). The current solution for reporting of Layer 1 Reference Signal Received Power (L1-RSRP) leads to the UE being required to perform L1-RSRP measurements on all the configured reference signals, including reference signals with very low Reference Signal Received Power (RSRP). These measurements are not useful to the network.

Certain aspects of the present disclosure and their embodiments may provide solutions to the aforementioned or other challenges. In one embodiment, a User Equipment (UE) is configured to only report a subset of configured Synchronization Signal Blocks (SSBs) that the UE has identified during the Radio Resource Management (RRM) measurements. Embodiments of a method to configure the UE to only report L1-RSRP for reference signals the UE has identified during RRM measurements are disclosed.

Certain embodiments may provide one or more of the following technical advantage(s). Embodiments of the present disclosure reduce UE complexity, since L1-RSRP is only measured for reference signals that are identified and measured for RRM purposes.

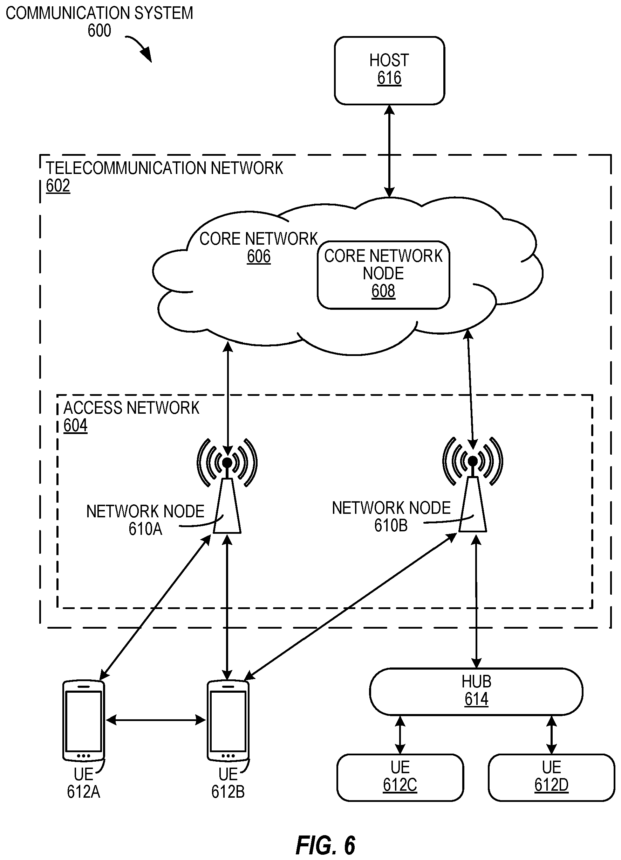

Figure 6 shows an example of a communication system 600 in which embodiments of the present disclosure may be implemented.

In the example, the communication system 600 includes a telecommunication network 602 that includes an access network 604, such as a Radio Access Network (RAN), and a core network 606, which includes one or more core network nodes 608. The access network 604 includes one or more access network nodes, such as network nodes 610A and 610B (one or more of which may be generally referred to as network nodes 610), or any other similar Third Generation Partnership Project (3GPP) access node or non-3GPP Access Point (AP). The network nodes 610 facilitate direct or indirect connection of User Equipment (UE), such as by connecting UEs 612A, 612B, 612C, and 612D (one or more of which may be generally referred to as UEs 612) to the core network 606 over one or more wireless connections.

Example wireless communications over a wireless connection include transmitting and/or receiving wireless signals using electromagnetic waves, radio waves, infrared waves, and/or other types of signals suitable for conveying information without the use of wires, cables, or other material conductors. Moreover, in different embodiments, the communication system 600 may include any number of wired or wireless networks, network nodes, UEs, and/or any other components or systems that may facilitate or participate in the communication of data and/or signals whether via wired or wireless connections. The communication system 600 may include and/or interface with any type of communication, telecommunication, data, cellular, radio network, and/or other similar type of system.

The UEs 612 may be any of a wide variety of communication devices, including wireless devices arranged, configured, and/or operable to communicate wirelessly with the network nodes 610 and other communication devices. Similarly, the network nodes 610 are arranged, capable, configured, and/or operable to communicate directly or indirectly with the UEs 612 and/or with other network nodes or equipment in the telecommunication network 602 to enable and/or provide network access, such as wireless network access, and/or to perform other functions, such as administration in the telecommunication network 602.

In the depicted example, the core network 606 connects the network nodes 610 to one or more hosts, such as host 616. These connections may be direct or indirect via one or more intermediary networks or devices. In other examples, network nodes may be directly coupled to hosts. The core network 606 includes one more core network nodes (e.g., core network node 608) that are structured with hardware and software components. Features of these components may be substantially similar to those described with respect to the UEs, network nodes, and/or hosts, such that the descriptions thereof are generally applicable to the corresponding components of the core network node 608. Example core network nodes include functions of one or more of a Mobile Switching Center (MSC), Mobility Management Entity (MME), Home Subscriber Server (HSS), Access and Mobility Management Function (AMF), Session Management Function (SMF), Authentication Server Function (AUSF), Subscription Identifier De-Concealing Function (SIDF), Unified Data Management (UDM), Security Edge Protection Proxy (SEPP), Network Exposure Function (NEF), and/or a User Plane Function (UPF).

The host 616 may be under the ownership or control of a service provider other than an operator or provider of the access network 604 and/or the telecommunication network 602, and may be operated by the service provider or on behalf of the service provider. The host 616 may host a variety of applications to provide one or more service. Examples of such applications include live and pre-recorded audio/video content, data collection services such as retrieving and compiling data on various ambient conditions detected by a plurality of UEs, analytics functionality, social media, functions for controlling or otherwise interacting with remote devices, functions for an alarm and surveillance center, or any other such function performed by a server.

As a whole, the communication system 600 of Figure 6 enables connectivity between the UEs, network nodes, and hosts. In that sense, the communication system 600 may be configured to operate according to predefined rules or procedures, such as specific standards that include, but are not limited to: Global System for Mobile Communications (GSM); Universal Mobile Telecommunications System (UMTS); Long Term Evolution (LTE), and/or other suitable Second, Third, Fourth, or Fifth Generation (2G, 3G, 4G, or 5G) standards, or any applicable future generation standard (e.g., Sixth Generation (6G)); Wireless Local Area Network (WLAN) standards, such as the Institute of Electrical and Electronics Engineers (IEEE) 802.11 standards (WiFi); and/or any other appropriate wireless communication standard, such as the Worldwide Interoperability for Microwave Access (WiMax), Bluetooth, Z-Wave, Near Field Communication (NFC) ZigBee, LiFi, and/or any Low Power Wide Area Network (LPWAN) standards such as LoRa and Sigfox.

In some examples, the telecommunication network 602 is a cellular network that implements 3GPP standardized features. Accordingly, the telecommunication network 602 may support network slicing to provide different logical networks to different devices that are connected to the telecommunication network 602. For example, the telecommunication network 602 may provide Ultra Reliable Low Latency Communication (URLLC) services to some UEs, while providing enhanced Mobile Broadband (eMBB) services to other UEs, and/or massive Machine Type Communication (mMTC)/massive Internet of Things (IoT) services to yet further UEs.

In some examples, the UEs 612 are configured to transmit and/or receive information without direct human interaction. For instance, a UE may be designed to transmit information to the access network 604 on a predetermined schedule, when triggered by an internal or external event, or in response to requests from the access network 604. Additionally, a UE may be configured for operating in single- or multi-Radio Access Technology (RAT) or multi-standard mode. For example, a UE may operate with any one or combination of WiFi, New Radio (NR), and LTE, i.e. be configured for Multi-Radio Dual Connectivity (MR-DC), such as Evolved UMTS Terrestrial RAN (E-UTRAN) NR - Dual Connectivity (EN-DC).

In the example, a hub 614 communicates with the access network 604 to facilitate indirect communication between one or more UEs (e.g., UE 612C and/or 612D) and network nodes (e.g., network node 610B). In some examples, the hub 614 may be a controller, router, content source and analytics, or any of the other communication devices described herein regarding UEs. For example, the hub 614 may be a broadband router enabling access to the core network 606 for the UEs. As another example, the hub 614 may be a controller that sends commands or instructions to one or more actuators in the UEs. Commands or instructions may be received from the UEs, network nodes 610, or by executable code, script, process, or other instructions in the hub 614. As another example, the hub 614 may be a data collector that acts as temporary storage for UE data and, in some embodiments, may perform analysis or other processing of the data. As another example, the hub 614 may be a content source. For example, for a UE that is a Virtual Reality (VR) headset, display, loudspeaker or other media delivery device, the hub 614 may retrieve VR assets, video, audio, or other media or data related to sensory information via a network node, which the hub 614 then provides to the UE either directly, after performing local processing, and/or after adding additional local content. In still another example, the hub 614 acts as a proxy server or orchestrator for the UEs, in particular in if one or more of the UEs are low energy IoT devices.

The hub 614 may have a constant/persistent or intermittent connection to the network node 610B. The hub 614 may also allow for a different communication scheme and/or schedule between the hub 614 and UEs (e.g., UE 612C and/or 612D), and between the hub 614 and the core network 606. In other examples, the hub 614 is connected to the core network 606 and/or one or more UEs via a wired connection. Moreover, the hub 614 may be configured to connect to a Machine-to-Machine (M2M) service provider over the access network 604 and/or to another UE over a direct connection. In some scenarios, UEs may establish a wireless connection with the network nodes 610 while still connected via the hub 614 via a wired or wireless connection. In some embodiments, the hub 614 may be a dedicated hub - that is, a hub whose primary function is to route communications to/from the UEs from/to the network node 610B. In other embodiments, the hub 614 may be a non-dedicated hub - that is, a device which is capable of operating to route communications between the UEs and the network node 610B, but which is additionally capable of operating as a communication start and/or end point for certain data channels.

A description of details of some embodiments of the present disclosure will now be provided. In one embodiment, a UE 612 is configured to only report a subset of configured reference signals (e.g., SSBs) that the UE 612 has identified during RRM measurements. Embodiments of a method to configure a UE 612 to only report L1-RSRP for reference signals the UE 612 has identified during RRM measurements are disclosed.

In a preferred embodiment, a UE 612 is configured to only report L1-RSRP of reference signals the UE 612 has identified during RRM measurements configured for the UE 612. The reference signal(s) may be an SSB(s). An example of which SSBs are included in the L1-RSRP measurements is provided in Table 1. As illustrated, a first set of SSBs {SSB_{1,1}, SSB_{1,2}, SSB_{1,3}, SSB_{1,4}, SSB_{2,1}, SSB_{2,2}, SSB_{2,3}, SSB_{2,4}} is configured for L1-RSRP measurement, and a second set of SSBs {SSB_{1,2}, SSB_{2,3}, SSB_{4,3}, SSB_{5,1}, SSB_{7,3}} is identified during RRM measurements (i.e., included in the RRC measurement report). As such, in this example, the UE 612 reports L1-RSRP measurements only for a subset of the first set of SSBs that consists of SSBs that are in both the first set of SSBs configured for L1-RSRP measurement and the second set of SSBs identified during RRM measurements. In this example, the subset of SSBs for which the UE 612 reports L1-RSRP consists of SSB_{1,2} and SSB_{2,3}.

**Table 1: An example of which measurements are included in the L1-RSRP measurement report. SSB_{2,3} means SSB 3 transmitted from cell 2. Only the SSBs the UE identifies are included in the L1-RSRP report.**

| Configured for L1-RSRP measurement | Identified during RRM measurements (included in RRC measurement report) | Included in L1-RSRP report |
|---|---|---|
| SSB_{1,1} | SSB_{1,2} | SSB_{1,2} |
| SSB_{1,2} | SSB_{2,3} | SSB_{2,3} |
| SSB_{1,3} | SSB_{4,3} | |
| SSB_{1,4} | SSB_{5,1} | |
| SSB_{2,1} | SSB_{7,3} | |
| SSB_{2,2} | | |
| SSB_{2,3} | | |
| SSB_{2,4} | | |

In one embodiment, if the measurement report contains a fixed number of L1-RSRP measurements and the number of L1-RSRP values reported by the UE is less than the fixed number, one reported L1-RSRP value could indicate that the corresponding reference signal was not found. For example, the lowest value in the reporting range could be used. Alternatively, a reference signal identity that is not configured could be reported.

In another embodiment, UE capability signaling is defined to report if the UE 612 supports to report all configured reference signals, or only the reference signals that are identified during the RRM measurements.

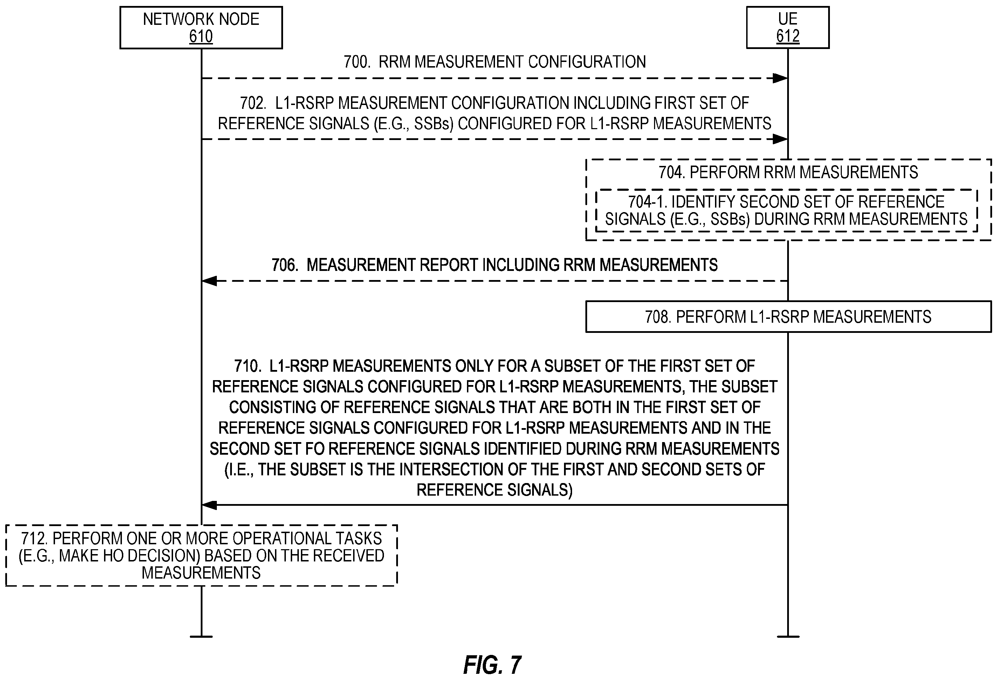

Figure 7 illustrates the operation of a network node 610 and a UE 612 in accordance with one example of an embodiment of the present disclosure. Optional steps are represented by dashed lines/boxes. As illustrated, the UE 612 receives, from the network node 610, an RRM measurement configuration (step 700). The RRM measurement configuration may include, for example, several parameters grouped in an IE such as, e.g., measurement objects, reporting configurations, measurement identities, quantity configurations, and/or measurement gaps. The UE 612 also receives, from the network node 610, a L1-RSRP measurement configuration (step 702). The L1-RSRP measurement configuration configures a first set of reference signals for L1-RSRP measurement.

The UE 612 performs RRM measurements, e.g., in accordance with the RRM measurement configuration (step 704). During the process of performing these RRM measurements, the UE 612 identifies a second set of reference signals (step 704-1). In other words, a second set of reference signals are identified during the RRM measurements. The UE 612 sends a measurement report that includes the RRM measurements for the second set of reference signals identified during the RRM measurements (step 706).

The UE 612 also performs L1-RSRP measurements (step 708) and sends at least some of the L1-RSRP measurements to the network node 610 (step 710). In one embodiment, the UE 612 performs and reports L1-RSRP measurements only on a subset of the first set of reference signals configured for L1-RSRP measurements, where this subset consist of only those reference signals in the first set of reference signals configured for L1-RSRP measurement that are also in the second set of reference signals identified during the RRM measurements. In another embodiment, the UE 612 performs L1-RSRP measurements on all of the reference signals in the first set of reference signals configured for the UE 612 for L1-RSRP measurement and reports only the L1-RSRP measurements performed on a subset of the first set of reference signals, where the subset where the subset consist of only those reference signals in the first set of reference signals configured for L1-RSRP measurement that are also in the second set of reference signals identified during the RRM measurements.

The network node 610 then uses the reports RRM measurements and the reported L1-RSRP measurements for one or more operational tasks, e.g., making a handover decision for the UE 612 (step 712).

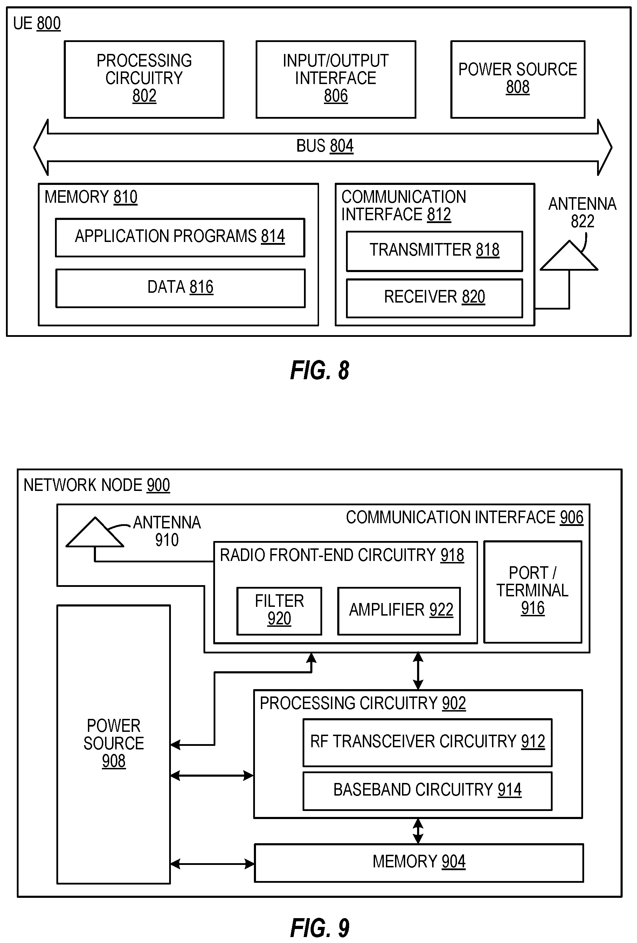

Figure 8 shows a UE 800 in accordance with some embodiments. The UE 800 is one example of the UE 612 of Figure 6. As used herein, a UE refers to a device capable, configured, arranged, and/or operable to communicate wirelessly with network nodes and/or other UEs. Examples of a UE include, but are not limited to, a smart phone, mobile phone, cell phone, Voice over Internet Protocol (VoIP) phone, wireless local loop phone, desktop computer, Personal Digital Assistant (PDA), wireless camera, gaming console or device, music storage device, playback appliance, wearable terminal device, wireless endpoint, mobile station, tablet, laptop, Laptop Embedded Equipment (LEE), Laptop Mounted Equipment (LME), smart device, wireless Customer Premise Equipment (CPE), vehicle-mounted or vehicle embedded/integrated wireless device, etc. Other examples include any UE identified by the 3GPP, including a Narrowband Internet of Things (NB-IoT) UE, a Machine Type Communication (MTC) UE, and/or an enhanced MTC (eMTC) UE.

A UE may support Device-to-Device (D2D) communication, for example by implementing a 3GPP standard for sidelink communication, Dedicated Short-Range Communication (DSRC), Vehicle-to-Vehicle (V2V), Vehicle-to-Infrastructure (V2I), or Vehicle-to-Everything (V2X). In other examples, a UE may not necessarily have a user in the sense of a human user who owns and/or operates the relevant device. Instead, a UE may represent a device that is intended for sale to, or operation by, a human user but which may not, or which may not initially, be associated with a specific human user (e.g., a smart sprinkler controller). Alternatively, a UE may represent a device that is not intended for sale to, or operation by, an end user but which may be associated with or operated for the benefit of a user (e.g., a smart power meter).

The UE 800 includes processing circuitry 802 that is operatively coupled via a bus 804 to an input/output interface 806, a power source 808, memory 810, a communication interface 812, and/or any other component, or any combination thereof. Certain UEs may utilize all or a subset of the components shown in Figure 8. The level of integration between the components may vary from one UE to another UE. Further, certain UEs may contain multiple instances of a component, such as multiple processors, memories, transceivers, transmitters, receivers, etc.

The processing circuitry 802 is configured to process instructions and data and may be configured to implement any sequential state machine operative to execute instructions stored as machine-readable computer programs in the memory 810. The processing circuitry 802 may be implemented as one or more hardware-implemented state machines (e.g., in discrete logic, Field Programmable Gate Arrays (FPGAs), Application Specific Integrated Circuits (ASICs), etc.); programmable logic together with appropriate firmware; one or more stored computer programs, general purpose processors, such as a microprocessor or Digital Signal Processor (DSP), together with appropriate software; or any combination of the above. For example, the processing circuitry 802 may include multiple Central Processing Units (CPUs).

In the example, the input/output interface 806 may be configured to provide an interface or interfaces to an input device, output device, or one or more input and/or output devices. Examples of an output device include a speaker, a sound card, a video card, a display, a monitor, a printer, an actuator, an emitter, a smartcard, another output device, or any combination thereof. An input device may allow a user to capture information into the UE 800. Examples of an input device include a touch-sensitive or presence-sensitive display, a camera (e.g., a digital camera, a digital video camera, a web camera, etc.), a microphone, a sensor, a mouse, a trackball, a directional pad, a trackpad, a scroll wheel, a smartcard, and the like. The presence-sensitive display may include a capacitive or resistive touch sensor to sense input from a user. A sensor may be, for instance, an accelerometer, a gyroscope, a tilt sensor, a force sensor, a magnetometer, an optical sensor, a proximity sensor, a biometric sensor, etc., or any combination thereof. An output device may use the same type of interface port as an input device. For example, a Universal Serial Bus (USB) port may be used to provide an input device and an output device.

In some embodiments, the power source 808 is structured as a battery or battery pack. Other types of power sources, such as an external power source (e.g., an electricity outlet), photovoltaic device, or power cell, may be used. The power source 808 may further include power circuitry for delivering power from the power source 808 itself, and/or an external power source, to the various parts of the UE 800 via input circuitry or an interface such as an electrical power cable. Delivering power may be, for example, for charging the power source 808. Power circuitry may perform any formatting, converting, or other modification to the power from the power source 808 to make the power suitable for the respective components of the UE 800 to which power is supplied.

The memory 810 may be or be configured to include memory such as Random Access Memory (RAM), Read Only Memory (ROM), Programmable ROM (PROM), Erasable PROM (EPROM), Electrically EPROM (EEPROM), magnetic disks, optical disks, hard disks, removable cartridges, flash drives, and so forth. In one example, the memory 810 includes one or more application programs 814, such as an operating system, web browser application, a widget, gadget engine, or other application, and corresponding data 816. The memory 810 may store, for use by the UE 800, any of a variety of various operating systems or combinations of operating systems.

The memory 810 may be configured to include a number of physical drive units, such as Redundant Array of Independent Disks (RAID), flash memory, USB flash drive, external hard disk drive, thumb drive, pen drive, key drive, High Density Digital Versatile Disc (HD-DVD) optical disc drive, internal hard disk drive, Blu-Ray optical disc drive, Holographic Digital Data Storage (HDDS) optical disc drive, external mini Dual In-line Memory Module (DIMM), Synchronous Dynamic RAM (SDRAM), external micro-DIMM SDRAM, smartcard memory such as a tamper resistant module in the form of a Universal Integrated Circuit Card (UICC) including one or more Subscriber Identity Modules (SIMs), such as a Universal SIM (USIM) and/or Internet Protocol Multimedia Services Identity Module (ISIM), other memory, or any combination thereof. The UICC may for example be an embedded UICC (eUICC), integrated UICC (iUICC) or a removable UICC commonly known as a 'SIM card.' The memory 810 may allow the UE 800 to access instructions, application programs, and the like stored on transitory or non-transitory memory media, to off-load data, or to upload data. An article of manufacture, such as one utilizing a communication system, may be tangibly embodied as or in the memory 810, which may be or comprise a device-readable storage medium.

The processing circuitry 802 may be configured to communicate with an access network or other network using the communication interface 812. The communication interface 812 may comprise one or more communication subsystems and may include or be communicatively coupled to an antenna 822. The communication interface 812 may include one or more transceivers used to communicate, such as by communicating with one or more remote transceivers of another device capable of wireless communication (e.g., another UE or a network node in an access network). Each transceiver may include a transmitter 818 and/or a receiver 820 appropriate to provide network communications (e.g., optical, electrical, frequency allocations, and so forth). Moreover, the transmitter 818 and receiver 820 may be coupled to one or more antennas (e.g., the antenna 822) and may share circuit components, software, or firmware, or alternatively be implemented separately.

In the illustrated embodiment, communication functions of the communication interface 812 may include cellular communication, WiFi communication, LPWAN communication, data communication, voice communication, multimedia communication, short-range communications such as Bluetooth, NFC, location-based communication such as the use of the Global Positioning System (GPS) to determine a location, another like communication function, or any combination thereof. Communications may be implemented according to one or more communication protocols and/or standards, such as IEEE 802.11, Code Division Multiplexing Access (CDMA), Wideband CDMA (WCDMA), GSM, LTE, NR, UMTS, WiMax, Ethernet, Transmission Control Protocol/Internet Protocol (TCP/IP), Synchronous Optical Networking (SONET), Asynchronous Transfer Mode (ATM), Quick User Datagram Protocol Internet Connection (QUIC), Hypertext Transfer Protocol (HTTP), and so forth.

Regardless of the type of sensor, a UE may provide an output of data captured by its sensors, through its communication interface 812, or via a wireless connection to a network node. Data captured by sensors of a UE can be communicated through a wireless connection to a network node via another UE. The output may be periodic (e.g., once every 15 minutes if it reports the sensed temperature), random (e.g., to even out the load from reporting from several sensors), in response to a triggering event (e.g., when moisture is detected an alert is sent), in response to a request (e.g., a user initiated request), or a continuous stream (e.g., a live video feed of a patient).

As another example, a UE comprises an actuator, a motor, or a switch related to a communication interface configured to receive wireless input from a network node via a wireless connection. In response to the received wireless input the states of the actuator, the motor, or the switch may change. For example, the UE may comprise a motor that adjusts the control surfaces or rotors of a drone in flight according to the received input or to a robotic arm performing a medical procedure according to the received input.

A UE, when in the form of an IoT device, may be a device for use in one or more application domains, these domains comprising, but not limited to, city wearable technology, extended industrial application, and healthcare. Non-limiting examples of such an IoT device are a device which is or which is embedded in: a connected refrigerator or freezer, a television, a connected lighting device, an electricity meter, a robot vacuum cleaner, a voice controlled smart speaker, a home security camera, a motion detector, a thermostat, a smoke detector, a door/window sensor, a flood/moisture sensor, an electrical door lock, a connected doorbell, an air conditioning system like a heat pump, an autonomous vehicle, a surveillance system, a weather monitoring device, a vehicle parking monitoring device, an electric vehicle charging station, a smart watch, a fitness tracker, a head-mounted display for Augmented Reality (AR) or VR, a wearable for tactile augmentation or sensory enhancement, a water sprinkler, an animal- or itemtracking device, a sensor for monitoring a plant or animal, an industrial robot, an Unmanned Aerial Vehicle (UAV), and any kind of medical device, like a heart rate monitor or a remote controlled surgical robot. A UE in the form of an IoT device comprises circuitry and/or software in dependence of the intended application of the IoT device in addition to other components as described in relation to the UE 800 shown in Figure 8.

As yet another specific example, in an IoT scenario, a UE may represent a machine or other device that performs monitoring and/or measurements and transmits the results of such monitoring and/or measurements to another UE and/or a network node. The UE may in this case be an M2M device, which may in a 3GPP context be referred to as an MTC device. As one particular example, the UE may implement the 3GPP NB-IoT standard. In other scenarios, a UE may represent a vehicle, such as a car, a bus, a truck, a ship, an airplane, or other equipment that is capable of monitoring and/or reporting on its operational status or other functions associated with its operation.

In practice, any number of UEs may be used together with respect to a single use case. For example, a first UE might be or be integrated in a drone and provide the drone's speed information (obtained through a speed sensor) to a second UE that is a remote controller operating the drone. When the user makes changes from the remote controller, the first UE may adjust the throttle on the drone (e.g., by controlling an actuator) to increase or decrease the drone's speed. The first and/or the second UE can also include more than one of the functionalities described above. For example, a UE might comprise the sensor and the actuator and handle communication of data for both the speed sensor and the actuators.

Figure 9 shows a network node 900 in accordance with some embodiments. The network node 900 is one example of the network node 610 of Figure 6. As used herein, network node refers to equipment capable, configured, arranged, and/or operable to communicate directly or indirectly with a UE and/or with other network nodes or equipment in a telecommunication network. Examples of network nodes include, but are not limited to, APs (e.g., radio APs), Base Stations (BSs) (e.g., radio BSs, Node Bs, evolved Node Bs (eNBs), and NR Node Bs (gNBs)).

BSs may be categorized based on the amount of coverage they provide (or, stated differently, their transmit power level) and so, depending on the provided amount of coverage, may be referred to as femto BSs, pico BSs, micro BSs, or macro BSs. A BS may be a relay node or a relay donor node controlling a relay. A network node may also include one or more (or all) parts of a distributed radio BS such as centralized digital units and/or Remote Radio Units (RRUs), sometimes referred to as Remote Radio Heads (RRHs). Such RRUs may or may not be integrated with an antenna as an antenna integrated radio. Parts of a distributed radio BS may also be referred to as nodes in a Distributed Antenna System (DAS).

Other examples of network nodes include multiple Transmission Point (multi-TRP) 5G access nodes, Multi-Standard Radio (MSR) equipment such as MSR BSs, network controllers such as Radio Network Controllers (RNCs) or BS Controllers (BSCs), Base Transceiver Stations (BTSs), transmission points, transmission nodes, Multi-Cell/Multicast Coordination Entities (MCEs), Operation and Maintenance (O&M) nodes, Operations Support System (OSS) nodes, Self-Organizing Network (SON) nodes, positioning nodes (e.g., Evolved Serving Mobile Location Centers (E-SMLCs)), and/or Minimization of Drive Tests (MDTs).

The network node 900 includes processing circuitry 902, memory 904, a communication interface 906, and a power source 908. The network node 900 may be composed of multiple physically separate components (e.g., a Node B component and an RNC component, or a BTS component and a BSC component, etc.), which may each have their own respective components. In certain scenarios in which the network node 900 comprises multiple separate components (e.g., BTS and BSC components), one or more of the separate components may be shared among several network nodes. For example, a single RNC may control multiple Node Bs. In such a scenario, each unique Node B and RNC pair may in some instances be considered a single separate network node. In some embodiments, the network node 900 may be configured to support multiple RATs. In such embodiments, some components may be duplicated (e.g., separate memory 904 for different RATs) and some components may be reused (e.g., an antenna 910 may be shared by different RATs). The network node 900 may also include multiple sets of the various illustrated components for different wireless technologies integrated into network node 900, for example GSM, WCDMA, LTE, NR, WiFi, Zigbee, Z-wave, Long Range Wide Area Network (LoRaWAN), Radio Frequency Identification (RFID), or Bluetooth wireless technologies. These wireless technologies may be integrated into the same or different chip or set of chips and other components within the network node 900.

The processing circuitry 902 may comprise a combination of one or more of a microprocessor, controller, microcontroller, CPU, DSP, ASIC, FPGA, or any other suitable computing device, resource, or combination of hardware, software, and/or encoded logic operable to provide, either alone or in conjunction with other network node 900 components, such as the memory 904, to provide network node 900 functionality.

In some embodiments, the processing circuitry 902 includes a System on a Chip (SOC). In some embodiments, the processing circuitry 902 includes one or more of Radio Frequency (RF) transceiver circuitry 912 and baseband processing circuitry 914. In some embodiments, the RF transceiver circuitry 912 and the baseband processing circuitry 914 may be on separate chips (or sets of chips), boards, or units, such as radio units and digital units. In alternative embodiments, part or all of the RF transceiver circuitry 912 and the baseband processing circuitry 914 may be on the same chip or set of chips, boards, or units.

The memory 904 may comprise any form of volatile or non-volatile computer-readable memory including, without limitation, persistent storage, solid state memory, remotely mounted memory, magnetic media, optical media, RAM, ROM, mass storage media (for example, a hard disk), removable storage media (for example, a flash drive, a Compact Disk (CD), or a Digital Video Disk (DVD)), and/or any other volatile or non-volatile, non-transitory device-readable, and/or computer-executable memory devices that store information, data, and/or instructions that may be used by the processing circuitry 902. The memory 904 may store any suitable instructions, data, or information, including a computer program, software, an application including one or more of logic, rules, code, tables, and/or other instructions capable of being executed by the processing circuitry 902 and utilized by the network node 900. The memory 904 may be used to store any calculations made by the processing circuitry 902 and/or any data received via the communication interface 906. In some embodiments, the processing circuitry 902 and the memory 904 are integrated.

The communication interface 906 is used in wired or wireless communication of signaling and/or data between a network node, access network, and/or UE. As illustrated, the communication interface 906 comprises port(s)/terminal(s) 916 to send and receive data, for example to and from a network over a wired connection. The communication interface 906 also includes radio front-end circuitry 918 that may be coupled to, or in certain embodiments a part of, the antenna 910. The radio front-end circuitry 918 comprises filters 920 and amplifiers 922. The radio front-end circuitry 918 may be connected to the antenna 910 and the processing circuitry 902. The radio front-end circuitry 918 may be configured to condition signals communicated between the antenna 910 and the processing circuitry 902. The radio front-end circuitry 918 may receive digital data that is to be sent out to other network nodes or UEs via a wireless connection. The radio front-end circuitry 918 may convert the digital data into a radio signal having the appropriate channel and bandwidth parameters using a combination of the filters 920 and/or the amplifiers 922. The radio signal may then be transmitted via the antenna 910. Similarly, when receiving data, the antenna 910 may collect radio signals which are then converted into digital data by the radio front-end circuitry 918. The digital data may be passed to the processing circuitry 902. In other embodiments, the communication interface 906 may comprise different components and/or different combinations of components.

In certain alternative embodiments, the network node 900 does not include separate radio front-end circuitry 918; instead, the processing circuitry 902 includes radio front-end circuitry and is connected to the antenna 910. Similarly, in some embodiments, all or some of the RF transceiver circuitry 912 is part of the communication interface 906. In still other embodiments, the communication interface 906 includes the one or more ports or terminals 916, the radio front-end circuitry 918, and the RF transceiver circuitry 912 as part of a radio unit (not shown), and the communication interface 906 communicates with the baseband processing circuitry 914, which is part of a digital unit (not shown).

The antenna 910 may include one or more antennas, or antenna arrays, configured to send and/or receive wireless signals. The antenna 910 may be coupled to the radio front-end circuitry 918 and may be any type of antenna capable of transmitting and receiving data and/or signals wirelessly. In certain embodiments, the antenna 910 is separate from the network node 900 and connectable to the network node 900 through an interface or port.

The antenna 910, the communication interface 906, and/or the processing circuitry 902 may be configured to perform any receiving operations and/or certain obtaining operations described herein as being performed by the network node 900. Any information, data, and/or signals may be received from a UE, another network node, and/or any other network equipment. Similarly, the antenna 910, the communication interface 906, and/or the processing circuitry 902 may be configured to perform any transmitting operations described herein as being performed by the network node 900. Any information, data, and/or signals may be transmitted to a UE, another network node, and/or any other network equipment.

The power source 908 provides power to the various components of the network node 900 in a form suitable for the respective components (e.g., at a voltage and current level needed for each respective component). The power source 908 may further comprise, or be coupled to, power management circuitry to supply the components of the network node 900 with power for performing the functionality described herein. For example, the network node 900 may be connectable to an external power source (e.g., the power grid or an electricity outlet) via input circuitry or an interface such as an electrical cable, whereby the external power source supplies power to power circuitry of the power source 908. As a further example, the power source 908 may comprise a source of power in the form of a battery or battery pack which is connected to, or integrated in, power circuitry. The battery may provide backup power should the external power source fail.

Embodiments of the network node 900 may include additional components beyond those shown in Figure 9 for providing certain aspects of the network node's functionality, including any of the functionality described herein and/or any functionality necessary to support the subject matter described herein. For example, the network node 900 may include user interface equipment to allow input of information into the network node 900 and to allow output of information from the network node 900. This may allow a user to perform diagnostic, maintenance, repair, and other administrative functions for the network node 900.

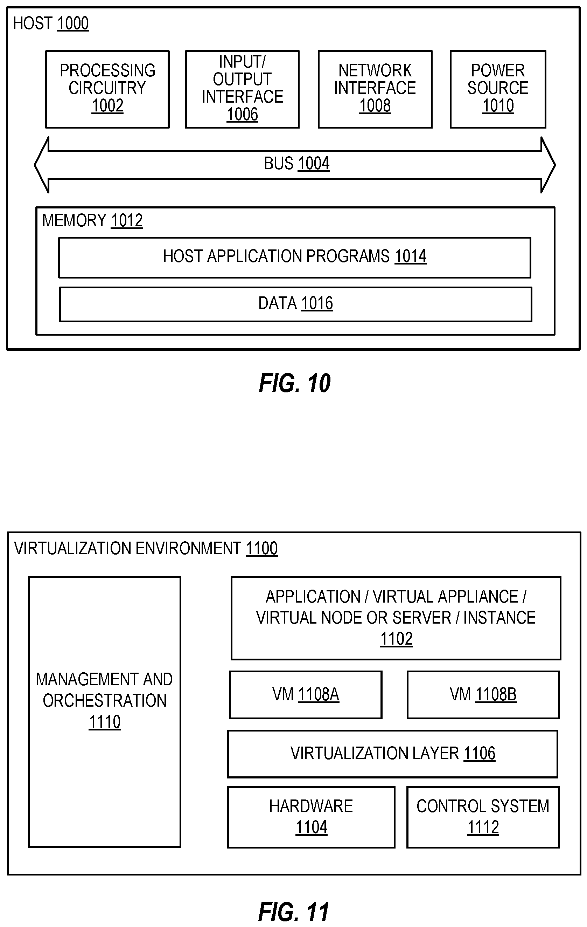

Figure 10 is a block diagram of a host 1000, which may be an embodiment of the host 616 of Figure 6, in accordance with various aspects described herein. As used herein, the host 1000 may be or comprise various combinations of hardware and/or software including a standalone server, a blade server, a cloud-implemented server, a distributed server, a virtual machine, container, or processing resources in a server farm. The host 1000 may provide one or more services to one or more UEs.

The host 1000 includes processing circuitry 1002 that is operatively coupled via a bus 1004 to an input/output interface 1006, a network interface 1008, a power source 1010, and memory 1012. Other components may be included in other embodiments. Features of these components may be substantially similar to those described with respect to the devices of previous figures, such as Figures 8 and 9, such that the descriptions thereof are generally applicable to the corresponding components of the host 1000.

The memory 1012 may include one or more computer programs including one or more host application programs 1014 and data 1016, which may include user data, e.g. data generated by a UE for the host 1000 or data generated by the host 1000 for a UE. Embodiments of the host 1000 may utilize only a subset or all of the components shown. The host application programs 1014 may be implemented in a container-based architecture and may provide support for video codecs (e.g., Versatile Video Coding (VVC), High Efficiency Video Coding (HEVC), Advanced Video Coding (AVC), Moving Picture Experts Group (MPEG), VP9) and audio codecs (e.g., Free Lossless Audio Codec (FLAC), Advanced Audio Coding (AAC), MPEG, G.711), including transcoding for multiple different classes, types, or implementations of UEs (e.g., handsets, desktop computers, wearable display systems, and heads-up display systems). The host application programs 1014 may also provide for user authentication and licensing checks and may periodically report health, routes, and content availability to a central node, such as a device in or on the edge of a core network. Accordingly, the host 1000 may select and/or indicate a different host for Over-The-Top (OTT) services for a UE. The host application programs 1014 may support various protocols, such as the HTTP Live Streaming (HLS) protocol, Real-Time Messaging Protocol (RTMP), Real-Time Streaming Protocol (RTSP), Dynamic Adaptive Streaming over HTTP (DASH or MPEG-DASH), etc.

Figure 11 is a block diagram illustrating a virtualization environment 1100 in which functions implemented by some embodiments may be virtualized. In the present context, virtualizing means creating virtual versions of apparatuses or devices which may include virtualizing hardware platforms, storage devices, and networking resources. As used herein, virtualization can be applied to any device described herein, or components thereof, and relates to an implementation in which at least a portion of the functionality is implemented as one or more virtual components. Some or all of the functions described herein may be implemented as virtual components executed by one or more Virtual Machines (VMs) implemented in one or more virtual environments 1100 hosted by one or more of hardware nodes, such as a hardware computing device that operates as a network node, UE, core network node, or host. Further, in embodiments in which the virtual node does not require radio connectivity (e.g., a core network node or host), then the node may be entirely virtualized.

Applications 1102 (which may alternatively be called software instances, virtual appliances, network functions, virtual nodes, virtual network functions, etc.) are run in the virtualization environment 1100 to implement some of the features, functions, and/or benefits of some of the embodiments disclosed herein.

Hardware 1104 includes processing circuitry, memory that stores software and/or instructions executable by hardware processing circuitry, and/or other hardware devices as described herein, such as a network interface, input/output interface, and so forth. Software may be executed by the processing circuitry to instantiate one or more virtualization layers 1106 (also referred to as hypervisors or VM Monitors (VMMs)), provide VMs 1108A and 1108B (one or more of which may be generally referred to as VMs 1108), and/or perform any of the functions, features, and/or benefits described in relation with some embodiments described herein. The virtualization layer 1106 may present a virtual operating platform that appears like networking hardware to the VMs 1108.

The VMs 1108 comprise virtual processing, virtual memory, virtual networking, or interface and virtual storage, and may be run by a corresponding virtualization layer 1106. Different embodiments of the instance of a virtual appliance 1102 may be implemented on one or more of the VMs 1108, and the implementations may be made in different ways. Virtualization of the hardware is in some contexts referred to as Network Function Virtualization (NFV). NFV may be used to consolidate many network equipment types onto industry standard high volume server hardware, physical switches, and physical storage, which can be located in data centers and customer premise equipment.

In the context of NFV, a VM 1108 may be a software implementation of a physical machine that runs programs as if they were executing on a physical, non-virtualized machine. Each of the VMs 1108, and that part of the hardware 1104 that executes that VM, be it hardware dedicated to that VM and/or hardware shared by that VM with others of the VMs 1108, forms separate virtual network elements. Still in the context of NFV, a virtual network function is responsible for handling specific network functions that run in one or more VMs 1108 on top of the hardware 1104 and corresponds to the application 1102.

The hardware 1104 may be implemented in a standalone network node with generic or specific components. The hardware 1104 may implement some functions via virtualization. Alternatively, the hardware 1104 may be part of a larger cluster of hardware (e.g., such as in a data center or CPE) where many hardware nodes work together and are managed via management and orchestration 1110, which, among others, oversees lifecycle management of the applications 1102. In some embodiments, the hardware 1104 is coupled to one or more radio units that each include one or more transmitters and one or more receivers that may be coupled to one or more antennas. Radio units may communicate directly with other hardware nodes via one or more appropriate network interfaces and may be used in combination with the virtual components to provide a virtual node with radio capabilities, such as a RAN or a BS. In some embodiments, some signaling can be provided with the use of a control system 1112 which may alternatively be used for communication between hardware nodes and radio units.

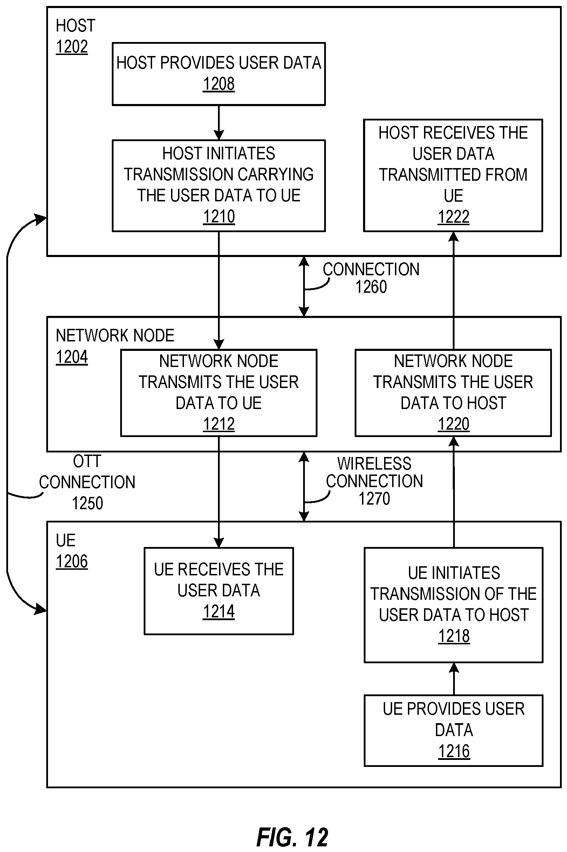

Figure 12 shows a communication diagram of a host 1202 communicating via a network node 1204 with a UE 1206 over a partially wireless connection in accordance with some embodiments. Example implementations, in accordance with various embodiments, of the UE (such as the UE 612A of Figure 6 and/or the UE 800 of Figure 8), the network node (such as the network node 610A of Figure 6 and/or the network node 900 of Figure 9), and the host (such as the host 616 of Figure 6 and/or the host 1000 of Figure 10) discussed in the preceding paragraphs will now be described with reference to Figure 12.

Like the host 1000, embodiments of the host 1202 include hardware, such as a communication interface, processing circuitry, and memory. The host 1202 also includes software, which is stored in or is accessible by the host 1202 and executable by the processing circuitry. The software includes a host application that may be operable to provide a service to a remote user, such as the UE 1206 connecting via an OTT connection 1250 extending between the UE 1206 and the host 1202. In providing the service to the remote user, a host application may provide user data which is transmitted using the OTT connection 1250.

The network node 1204 includes hardware enabling it to communicate with the host 1202 and the UE 1206 via a connection 1260. The connection 1260 may be direct or pass through a core network (like the core network 606 of Figure 6) and/or one or more other intermediate networks, such as one or more public, private, or hosted networks. For example, an intermediate network may be a backbone network or the Internet.

The UE 1206 includes hardware and software, which is stored in or accessible by the UE 1206 and executable by the UE's processing circuitry. The software includes a client application, such as a web browser or operator-specific "app" that may be operable to provide a service to a human or non-human user via the UE 1206 with the support of the host 1202. In the host 1202, an executing host application may communicate with the executing client application via the OTT connection 1250 terminating at the UE 1206 and the host 1202. In providing the service to the user, the UE's client application may receive request data from the host's host application and provide user data in response to the request data. The OTT connection 1250 may transfer both the request data and the user data. The UE's client application may interact with the user to generate the user data that it provides to the host application through the OTT connection 1250.

The OTT connection 1250 may extend via the connection 1260 between the host 1202 and the network node 1204 and via a wireless connection 1270 between the network node 1204 and the UE 1206 to provide the connection between the host 1202 and the UE 1206. The connection 1260 and the wireless connection 1270, over which the OTT connection 1250 may be provided, have been drawn abstractly to illustrate the communication between the host 1202 and the UE 1206 via the network node 1204, without explicit reference to any intermediary devices and the precise routing of messages via these devices.

As an example of transmitting data via the OTT connection 1250, in step 1208, the host 1202 provides user data, which may be performed by executing a host application. In some embodiments, the user data is associated with a particular human user interacting with the UE 1206. In other embodiments, the user data is associated with a UE 1206 that shares data with the host 1202 without explicit human interaction. In step 1210, the host 1202 initiates a transmission carrying the user data towards the UE 1206. The host 1202 may initiate the transmission responsive to a request transmitted by the UE 1206. The request may be caused by human interaction with the UE 1206 or by operation of the client application executing on the UE 1206. The transmission may pass via the network node 1204 in accordance with the teachings of the embodiments described throughout this disclosure. Accordingly, in step 1212, the network node 1204 transmits to the UE 1206 the user data that was carried in the transmission that the host 1202 initiated, in accordance with the teachings of the embodiments described throughout this disclosure. In step 1214, the UE 1206 receives the user data carried in the transmission, which may be performed by a client application executed on the UE 1206 associated with the host application executed by the host 1202.

In some examples, the UE 1206 executes a client application which provides user data to the host 1202. The user data may be provided in reaction or response to the data received from the host 1202. Accordingly, in step 1216, the UE 1206 may provide user data, which may be performed by executing the client application. In providing the user data, the client application may further consider user input received from the user via an input/output interface of the UE 1206. Regardless of the specific manner in which the user data was provided, the UE 1206 initiates, in step 1218, transmission of the user data towards the host 1202 via the network node 1204. In step 1220, in accordance with the teachings of the embodiments described throughout this disclosure, the network node 1204 receives user data from the UE 1206 and initiates transmission of the received user data towards the host 1202. In step 1222, the host 1202 receives the user data carried in the transmission initiated by the UE 1206.

One or more of the various embodiments improve the performance of OTT services provided to the UE 1206 using the OTT connection 1250, in which the wireless connection 1270 forms the last segment. More precisely, the teachings of these embodiments may improve power consumption and thereby provide benefits such as, e.g., extended battery lifetime.

In an example scenario, factory status information may be collected and analyzed by the host 1202. As another example, the host 1202 may process audio and video data which may have been retrieved from a UE for use in creating maps. As another example, the host 1202 may collect and analyze real-time data to assist in controlling vehicle congestion (e.g., controlling traffic lights). As another example, the host 1202 may store surveillance video uploaded by a UE. As another example, the host 1202 may store or control access to media content such as video, audio, VR, or AR which it can broadcast, multicast, or unicast to UEs. As other examples, the host 1202 may be used for energy pricing, remote control of non-time critical electrical load to balance power generation needs, location services, presentation services (such as compiling diagrams etc. from data collected from remote devices), or any other function of collecting, retrieving, storing, analyzing, and/or transmitting data.

In some examples, a measurement procedure may be provided for the purpose of monitoring data rate, latency, and other factors on which the one or more embodiments improve. There may further be an optional network functionality for reconfiguring the OTT connection 1250 between the host 1202 and the UE 1206 in response to variations in the measurement results. The measurement procedure and/or the network functionality for reconfiguring the OTT connection 1250 may be implemented in software and hardware of the host 1202 and/or the UE 1206. In some embodiments, sensors (not shown) may be deployed in or in association with other devices through which the OTT connection 1250 passes; the sensors may participate in the measurement procedure by supplying values of the monitored quantities exemplified above, or by supplying values of other physical quantities from which software may compute or estimate the monitored quantities. The reconfiguring of the OTT connection 1250 may include message format, retransmission settings, preferred routing, etc.; the reconfiguring need not directly alter the operation of the network node 1204. Such procedures and functionalities may be known and practiced in the art. In certain embodiments, measurements may involve proprietary UE signaling that facilitates measurements of throughput, propagation times, latency, and the like by the host 1202. The measurements may be implemented in that software causes messages to be transmitted, in particular empty or 'dummy' messages, using the OTT connection 1250 while monitoring propagation times, errors, etc.

Although the computing devices described herein (e.g., UEs, network nodes, hosts) may include the illustrated combination of hardware components, other embodiments may comprise computing devices with different combinations of components. It is to be understood that these computing devices may comprise any suitable combination of hardware and/or software needed to perform the tasks, features, functions, and methods disclosed herein. Determining, calculating, obtaining, or similar operations described herein may be performed by processing circuitry, which may process information by, for example, converting the obtained information into other information, comparing the obtained information or converted information to information stored in the network node, and/or performing one or more operations based on the obtained information or converted information, and as a result of said processing making a determination. Moreover, while components are depicted as single boxes located within a larger box or nested within multiple boxes, in practice computing devices may comprise multiple different physical components that make up a single illustrated component, and functionality may be partitioned between separate components. For example, a communication interface may be configured to include any of the components described herein, and/or the functionality of the components may be partitioned between the processing circuitry and the communication interface. In another example, non-computationally intensive functions of any of such components may be implemented in software or firmware and computationally intensive functions may be implemented in hardware.

In certain embodiments, some or all of the functionality described herein may be provided by processing circuitry executing instructions stored in memory, which in certain embodiments may be a computer program product in the form of a non-transitory computer-readable storage medium. In alternative embodiments, some or all of the functionality may be provided by the processing circuitry without executing instructions stored on a separate or discrete device-readable storage medium, such as in a hardwired manner. In any of those particular embodiments, whether executing instructions stored on a non-transitory computer-readable storage medium or not, the processing circuitry can be configured to perform the described functionality. The benefits provided by such functionality are not limited to the processing circuitry alone or to other components of the computing device, but are enjoyed by the computing device as a whole and/or by end users and a wireless network generally.

Some example embodiments of the present disclosure are as follows:

## Claims

1. A method performed by a User Equipment, UE, (612), the method comprising:
performing (708) physical layer, L1, Reference Signal Received Power, RSRP, measurements for a subset of a first set of reference signals configured for L1-RSRP measurements, the subset of the first set of reference signals consisting of reference signals that are both in the first set of reference signals configured for L1-RSRP measurements and in a second set of reference signals identified during Radio Resource Management, RRM, measurements performed by the UE (612); and
reporting (710) the L1-RSRP measurements only for the subset of the first set of reference signals configured for L1-RSRP measurements.

2. The method of claim 1 further comprising receiving (700, 702), from a network node (610):
information that configures the UE (612) to perform the RRM measurements; and
information that configures the UE (612) to perform the L1-RSRP measurements on the first set of reference signals.

3. The method of claim 1 or 2 further comprising performing (704) the RRM measurements, wherein performing (704) the RRM measurements comprising identifying (704-1) the second set of reference signals.

4. The method of claim 3 further comprising reporting (706) the RRM measurements for the second set of reference signals identified while performing the RRM measurements.

5. The method of any of claims 1 to 4 wherein performing (708) the L1-RSRP measurements comprises performing (708) the L1-RSRP measurements for only the subset of the first set of reference signals configured for L1-RSRP measurements.

6. The method of any of claims 1 to 4 wherein performing (708) the L1-RSRP measurements comprises performing (708) the L1-RSRP measurements for the first set of reference signals configured for L1-RSRP measurements.

7. The method of any of claims 1 to 6 wherein:
reporting (710) the L1-RSRP measurements comprises reporting (710) a fixed number of L1-RSRP measurement values;
the number of L1-RSRP measurements reported for the subset of the first set of reference signals configured for L1-RSRP measurements is less than the fixed number of L1-RSRP measurement values; and
the L1-RSRP measurements reported comprise the L1-RSRP measurements reported for the subset of the first set of reference signals configured for L1-RSRP measurements and a number predetermined L1-RSRP values that indicate that corresponding reference signals were not found, such that a total number of L1-RSRP measurements reported is equal to the fixed number of L1-RSRP measurement values.

8. The method of any of claims 1 to 7 wherein the UE (612) reports capability information to a network node that indicates whether the UE (612) supports reporting of all reference signals configured for L1-RSRP measurement or only a subset of those reference signals that are identified during RRM measurements.

9. The method of any of claims 1 to 8 wherein the reference signals are Synchronization Signal Blocks, SSBs.

10. A User Equipment, UE, (612; 800) comprising:
a communication interface (812) comprising a transmitter (818) and a receiver (820); and
processing circuitry (802) communicatively coupled to the communication interface (812), the processing circuitry (802) configured to cause the UE (612; 800) to:
perform (708) physical layer, L1, Reference Signal Received Power, RSRP, measurements for a subset of a first set of reference signals configured for L1-RSRP measurements, the subset of the first set of reference signals consisting of reference signals that are both in the first set of reference signals configured for L1-RSRP measurements and in a second set of reference signals identified during Radio Resource Management, RRM, measurements performed by the UE (612); and
report (710) the L1-RSRP measurements only for the subset of the first set of reference signals configured for L1-RSRP measurements.

11. A method performed by a network node (610), the method comprising:
receiving (710), from a User Equipment, UE, (612), physical layer, L1, Reference Signal Received Power, RSRP, measurements for only a subset of a first set of reference signals configured to the UE (612) for L1-RSRP measurements, wherein the subset of the first set of reference signals consist of reference signals that are both in the first set of reference signals configured for L1-RSRP measurements and in a second set of reference signals identified by the UE (612) during Radio Resource Management, RRM, measurements.

12. The method of claim 11 further comprising performing (712) one or more operational tasks based on the L1-RSRP measurements.

13. The method of any of claims 11 to 12 wherein:
receiving (710) the L1-RSRP measurements comprises receiving (710), from the UE (612), a fixed number of L1-RSRP measurement values comprising the L1-RSRP measurements reported for the subset of the first set of reference signals configured for L1-RSRP measurements and a number predetermined L1-RSRP values that indicate that corresponding reference signals were not found, such that a total number of L1-RSRP measurements received from the UE (612) is equal to the fixed number of L1-RSRP measurement values.

14. The method of any of claims 11 to 13 wherein the network node receives capability information for the UE (612) that indicates whether the UE (612) supports reporting of all reference signals configured for L1-RSRP measurement or only a subset of those reference signals that are identified during RRM measurements.

15. The method of any of claims 11 to 14 wherein the reference signals are Synchronization Signal Blocks, SSBs.

## Patentansprüche

1. Verfahren, das von einer Benutzerausrüstung (UE) durchgeführt wird (612), wobei das Verfahren Folgendes umfasst:
Durchführen an der (708) physikalischen Schicht, L1, von Referenzsignal-Empfangsleistungs-, RSRP-, Messungen für eine Teilmenge einer ersten Menge von Referenzsignalen, die für L1-RSRP-Messungen konfiguriert sind, wobei die Teilmenge der ersten Menge von Referenzsignalen aus Referenzsignalen besteht, die sich sowohl in der ersten Menge von Referenzsignalen, die für L1-RSRP-Messungen konfiguriert sind, als auch in einer zweiten Menge von Referenzsignalen, die während von der UE durchgeführten (612) Funkressourcenmanagement-, RRM-, Messungen identifiziert werden, befinden; und
Melden (710) der L1-RSRP-Messungen nur für die Teilmenge der ersten Menge von Referenzsignalen, die für L1-RSRP-Messungen konfiguriert sind.

2. Verfahren nach Anspruch 1, weiter umfassend das Empfangen (700, 702), von einem Netzwerkknoten (610), von Folgendem:
Informationen, welche die UE (612) zum Durchführen der RRM-Messungen konfigurieren; und
Informationen, welche die UE (612) zum Durchführen der L1-RSRP-Messungen an der ersten Menge von Referenzsignalen konfigurieren.

3. Verfahren nach Anspruch 1 oder 2, weiter umfassend das Durchführen (704) der RRM-Messungen, wobei das Durchführen (704) der RRM-Messungen das Identifizieren (704-1) der zweiten Menge von Referenzsignalen umfasst.

4. Verfahren nach Anspruch 3, weiter umfassend das Melden (706) der RRM-Messungen für die zweite Menge von Referenzsignalen, die während des Durchführens der RRM-Messungen identifiziert werden.

5. Verfahren nach einem der Ansprüche 1 bis 4, wobei das Durchführen (708) der L1-RSRP-Messungen das Durchführen (708) der L1-RSRP-Messungen nur für die Teilmenge der ersten Menge von Referenzsignalen, die für L1-RSRP-Messungen konfiguriert sind, umfasst.

6. Verfahren nach einem der Ansprüche 1 bis 4, wobei das Durchführen (708) der L1-RSRP-Messungen das Durchführen (708) der L1-RSRP-Messungen für die erste Menge von Referenzsignalen, die für L1-RSRP-Messungen konfiguriert sind, umfasst.

7. Verfahren nach einem der Ansprüche 1 bis 6, wobei:
das Melden (710) der L1-RSRP-Messungen das Melden (710) einer festen Anzahl von L1-RSRP-Messwerten umfasst;
die Anzahl von für die Teilmenge der ersten Menge von Referenzsignalen, die für L1-RSRP-Messungen konfiguriert sind, gemeldeten L1-RSRP-Messwerten geringer ist als die festgelegte Anzahl von L1-RSRP-Messwerten; und
die gemeldeten L1-RSRP-Messungen die für die Teilmenge der ersten Menge von Referenzsignalen, die für L1-RSRP-Messungen konfiguriert sind, gemeldeten L1-RSRP-Messungen und eine Anzahl von vorbestimmten L1-RSRP-Werte, die angeben, dass entsprechende Referenzsignale nicht gefunden werden, umfassen, sodass eine Gesamtzahl von gemeldeten L1-RSRP-Messungen gleich der festgelegten Anzahl von L1-RSRP-Messwerten ist.

8. Verfahren nach einem der Ansprüche 1 bis 7, wobei die UE (612) einem Netzwerkknoten Fähigkeitsinformationen meldet, die angeben, ob die UE (612) das Melden aller für die L1-RSRP-Messung konfigurierten Referenzsignale unterstützt oder nur einer Teilmenge dieser Referenzsignale, die während der RRM-Messungen identifiziert werden.

9. Verfahren nach einem der Ansprüche 1 bis 8, wobei die Referenzsignalen Synchronisationssignalblöcke, SSB, sind.

10. Benutzerausrüstung, UE, (612; 800), umfassend:
eine Kommunikationsschnittstelle (812), die einen Sender (818) und einen Empfänger (820) umfasst; und
Verarbeitungsschaltungstechnik (802), die kommunikativ mit der Kommunikationsschnittstelle (812) verbunden ist, wobei die Verarbeitungsschaltungstechnik (802) dafür konfiguriert ist, die UE (612; 800) zu Folgendem zu veranlassen:
Referenzsignal-Empfangsleistungs-, RSRP-, Messungen der physikalischen Schicht (L1) für eine Teilmenge einer ersten Menge von Referenzsignalen, die für L1-RSRP-Messungen konfiguriert sind, durchzuführen (708), wobei die Teilmenge der ersten Menge von Referenzsignalen aus Referenzsignalen besteht, die sich sowohl in der ersten Menge von Referenzsignalen, die für L1-RSRP-Messungen konfiguriert sind, als auch in einer zweiten Menge von Referenzsignalen, die während von der UE durchgeführten (612) Funkressourcenmanagement-, RRM-, Messungen identifiziert werden, befinden; und
die L1-RSRP-Messungen nur für die Teilmenge der ersten Menge von Referenzsignalen, die für L1-RSRP-Messungen konfiguriert sind, zu melden (710).

11. Verfahren, das von einem Netzwerkknoten (610) durchgeführt wird, wobei das Verfahren Folgendes umfasst:
Empfangen (710), von einer Benutzerausrüstung, UE, (612), von einer physikalischen Schicht, L1, von Referenzsignal-Empfangsleistungs-, RSRP-, Messungen nur für eine Teilmenge einer ersten Menge von Referenzsignalen, die für L1-RSRP-Messungen an die UE (612) konfiguriert sind, wobei die Teilmenge der ersten Menge von Referenzsignalen aus Referenzsignalen besteht, die sich sowohl in der ersten Menge von Referenzsignalen, die für L1-RSRP-Messungen konfiguriert sind, als auch in einer zweiten Menge von Referenzsignalen, die während Funkressourcenmanagement-, RRM-, Messungen von der UE (612) identifiziert werden, befinden.

12. Verfahren nach Anspruch 11, weiter umfassend das Durchführen (712) einer oder mehrerer operativer Aufgaben auf Grundlage der L1-RSRP-Messungen.

13. Verfahren nach einem der Ansprüche 11 bis 12, wobei:
das Empfangen (710) der L1-RSRP-Messungen das Empfangen (710), von der UE (612) einer festen Anzahl von L1-RSRP-Messwerten, welche die für die Teilmenge der ersten Menge von Referenzsignalen, die für L1-RSRP-Messungen konfiguriert sind, gemeldeten L1-RSRP-Messwerte und eine Anzahl vorbestimmter L1-RSRP-Werte, die angeben, dass entsprechende Referenzsignale nicht gefunden werden, umfassen, so dass die Gesamtzahl der von der UE (612) empfangenen L1-RSRP-Messungen gleich der festen Anzahl von L1-RSRP-Messwerten ist, umfasst.

14. Verfahren nach einem der Ansprüche 11 bis 13, wobei der Netzwerkknoten Fähigkeitsinformationen für die UE (612) empfängt, die angeben, ob die UE (612) das Melden aller für die L1-RSRP-Messung konfigurierten Referenzsignale oder nur einer Teilmenge dieser Referenzsignale, die während der RRM-Messungen identifiziert werden, unterstützt.

15. Verfahren nach einem der Ansprüche 11 bis 14, wobei die Referenzsignale Synchronisationssignalblöcke, SSB, sind.

## Revendications

1. Procédé mis en œuvre par un équipement d'utilisateur (UE) (612), le procédé comprenant :
l'exécution (708) de mesures de puissance reçue de signal de référence, RSRP, de couche physique L1 pour un sous-ensemble d'un premier ensemble de signaux de référence configurés pour les mesures L1-RSRP, le sous-ensemble du premier ensemble de signaux de référence consistant en des signaux de référence qui figurent à la fois dans le premier ensemble de signaux de référence configurés pour les mesures L1-RSRP et dans un second ensemble de signaux de référence identifiés lors de mesures de gestion des ressources radio, RRM, effectuées par l'UE (612) ; et
la notification (710) des mesures L1-RSRP uniquement pour le sous-ensemble du premier ensemble de signaux de référence configurés pour les mesures L1-RSRP.

2. Procédé selon la revendication 1, comprenant en outre la réception (700, 702), à partir d'un nœud de réseau (610) :
d'informations qui configurent l'UE (612) pour effectuer les mesures RRM ; et
d'informations qui configurent l'UE (612) pour effectuer les mesures L1-RSRP sur le premier ensemble de signaux de référence.

3. Procédé selon la revendication 1 ou 2, comprenant en outre l'exécution (704) des mesures RRM, dans lequel l'exécution (704) des mesures RRM comprend l'identification (704-1) du second ensemble de signaux de référence.

4. Procédé selon la revendication 3, comprenant en outre la notification (706) des mesures RRM pour le second ensemble de signaux de référence identifiés lors de l'exécution des mesures RRM.

5. Procédé selon l'une quelconque des revendications 1 à 4, dans lequel l'exécution (708) des mesures L1-RSRP comprend l'exécution (708) des mesures L1-RSRP uniquement pour le sous-ensemble du premier ensemble de signaux de référence configurés pour les mesures L1-RSRP.

6. Procédé selon l'une quelconque des revendications 1 à 4, dans lequel l'exécution (708) des mesures L1-RSRP comprend l'exécution (708) des mesures L1-RSRP pour le premier ensemble de signaux de référence configurés pour les mesures L1-RSRP.

7. Procédé selon l'une quelconque des revendications 1 à 6, dans lequel :
la notification (710) des mesures L1-RSRP comprend la notification (710) d'un nombre fixe de valeurs de mesure L1-RSRP ;
le nombre de mesures L1-RSRP notifiées pour le sous-ensemble du premier ensemble de signaux de référence configurés pour les mesures L1-RSRP est inférieur au nombre fixe de valeurs de mesure L1-RSRP ; et
les mesures L1-RSRP notifiées comprennent les mesures L1-RSRP notifiées pour le sous-ensemble du premier ensemble de signaux de référence configurés pour les mesures L1-RSRP et un certain nombre de valeurs L1-RSRP prédéterminées qui indiquent que les signaux de référence correspondants n'ont pas été trouvés, de sorte que le nombre total de mesures L1-RSRP notifiées soit égal au nombre fixe de valeurs de mesure L1-RSRP.

8. Procédé selon l'une quelconque des revendications 1 à 7, dans lequel l'UE (612) notifie des informations de capacité à un nœud de réseau qui indiquent si l'UE (612) prend en charge la notification de tous les signaux de référence configurés pour la mesure L1-RSRP ou seulement d'un sous-ensemble de ces signaux de référence qui sont identifiés lors des mesures RRM.

9. Procédé selon l'une quelconque des revendications 1 à 8, dans lequel les signaux de référence sont des blocs de signaux de synchronisation, SSB.

10. Équipement d'utilisateur, UE, (612 ; 800) comprenant :
une interface de communication (812) comprenant un émetteur (818) et un récepteur (820) ; et
une circuiterie de traitement (802) couplée en communication à l'interface de communication (812), la circuiterie de traitement (802) étant configurée pour amener l'UE (612 ; 800) à :
effectuer (708) des mesures de puissance reçue de signal de référence, RSRP, de couche physique L1 pour un sous-ensemble d'un premier ensemble de signaux de référence configurés pour les mesures L1-RSRP, le sous-ensemble du premier ensemble de signaux de référence consistant en des signaux de référence qui figurent à la fois dans le premier ensemble de signaux de référence configurés pour les mesures L1-RSRP et dans un second ensemble de signaux de référence identifiés lors des mesures de gestion des ressources radio, RRM, effectuées par l'UE (612) ; et
notifier (710) les mesures L1-RSRP uniquement pour le sous-ensemble du premier ensemble de signaux de référence configurés pour les mesures L1-RSRP.

11. Procédé réalisé par un nœud de réseau (610), le procédé comprenant :
la réception (710), d'un équipement d'utilisateur, UE, (612), de mesures de puissance reçue de signal de référence, RSRP, de couche physique L1, uniquement pour un sous-ensemble d'un premier ensemble de signaux de référence configurés par rapport à l'UE (612) pour les mesures L1-RSRP, dans lequel le sous-ensemble du premier ensemble de signaux de référence consiste en des signaux de référence qui figurent à la fois dans le premier ensemble de signaux de référence configurés pour les mesures L1-RSRP et dans un second ensemble de signaux de référence identifiés par l'UE (612) lors des mesures de gestion des ressources radio, RRM.

12. Procédé selon la revendication 11, comprenant en outre l'exécution (712) d'une ou plusieurs tâches opérationnelles basées sur les mesures L1-RSRP.

13. Procédé selon l'une quelconque des revendications 11 à 12, dans lequel :
la réception (710) des mesures L1-RSRP comprend la réception (710), de l'UE (612), d'un nombre fixe de valeurs de mesure L1-RSRP comprenant les mesures L1-RSRP notifiées pour le sous-ensemble du premier ensemble de signaux de référence configurés pour les mesures L1-RSRP et d'un nombre prédéterminé de valeurs L1-RSRP qui indiquent que les signaux de référence correspondants n'ont pas été trouvés, de sorte qu'un nombre total de mesures L1-RSRP reçues de l'UE (612) soit égal au nombre fixe de valeurs de mesure L1-RSRP.

14. Procédé selon l'une quelconque des revendications 11 à 13, dans lequel le nœud de réseau reçoit des informations de capacité pour l'UE (612) qui indiquent si l'UE (612) prend en charge la notification de tous les signaux de référence configurés pour la mesure L1-RSRP ou seulement d'un sous-ensemble de ces signaux de référence identifiés lors des mesures RRM.

15. Procédé selon l'une quelconque des revendications 11 à 14, dans lequel les signaux de référence sont des blocs de signaux de synchronisation, SSB.
